# EUROPÄISCHE PATENTSCHRIFT

(11) **EP 2 653 571 B1**
(45) Veröffentlichungstag und Bekanntmachung des Hinweises auf die Patenterteilung: **24.10.2018**
(21) Anmeldenummer: 13002012.6
(22) Anmeldetag: 17.04.2013
(51) Int. Cl.: C21D 9/32, C21D 1/10, C21D 1/42, H05B 6/40

(54) **Induktor zum induktiven Härten von länglichen metallischen Werkstücken**
Inductor for inductive heating of elongated metallic workpieces
Inducteur pour le chauffage par induction de pièces métalliques allongées

(30) Priorität: 18.04.2012 DE 102012014440
(43) Veröffentlichungstag der Anmeldung: 23.10.2013
(73) Patentinhaber: EFD Induction GmbH, 79106 Freiburg (DE)
(72) Erfinder: Stiele, Hansjuerg, 79112 Freiburg (DE); Eckert, David, 79189 Bad Krozingen (DE)
(74) Vertreter: Mehl-Mikus, Claudia

(56) Entgegenhaltungen:
- CN-Y- 201 265 030
- DATABASE WPI Week 200349 Thomson Scientific, London, GB; AN 2003-517685 XP002758350, -& JP 2003 147438 A (FUJI ELECTRONICS IND CO LTD) 21. Mai 2003 (2003-05-21)

## Beschreibung

Die Erfindung betrifft einen Induktor zum induktiven Härten von länglichen metallischen Werkstücken, insbesondere Zahnstangen.

Das besondere Anwendungsgebiet der Erfindung ist das induktive Härten von Zahnstangen. Diese sind charakterisiert durch einen länglichen Metallstab beispielsweise mit einem kreisförmigen Querschnitt, wobei sich auf der Manteloberfläche dieses metallischen Stabes quer zu dessen Längserstreckung die Zahnprofile erstrecken. Nichtsdestoweniger kann der erfindungsgemäße Induktor auch zum Härten von anderen länglichen metallischen Werkstücken eingesetzt werden.

Zum Härten von Zahnstangen sind sogenannte Steigbügelinduktoren bzw. D-Induktoren bekannt. Darunter ist zu verstehen, daß der Induktor im Wesentlichen U-förmig ausgebildet ist, wobei die beiden freien Enden der Schenkel durch einen quer verlaufenden Induktorabschnitt miteinander verbunden sind. Dieser geradlinige Induktorabschnitt liegt gegenüber dem Zahnprofil und härtet dieses. Die Zahnstange wird dabei während des induktiven Härtens in einer Relativbewegung durch diesen Steigbügelinduktor bzw. D-Induktor hindurchgeführt. Umgekehrt kann auch die Zahnstange stationär angeordnet sein, und der Steigbügelinduktor bzw. D-Induktor wird - ebenfalls in einer Relativbewegung - in Längsrichtung der Zahnstange bewegt

Ein solcher Induktor ist aus der CN 201265030 Y bekannt.

Der Nachteil bei diesem bekannten Steigbügelinduktor besteht darin, daß aufgrund der Queranordnung des für die Härtung des Zahnprofils verantwortlichen Induktorabschnittes ein Magnetfeld erzeugt wird, welches für das induktive Härten nicht optimal ist.

Ferner ist aus der JP 2003-147438 A ein Induktor zum Härten von Zahnstangen bekannt, wobei der Induktor ein längliches Mittelteil aufweist, um den in den Zahngrund induzierten Strom zu verstärken.

Davon ausgehend liegt daher der Erfindung die Aufgabe zugrunde, einen verbesserten Induktor zum induktiven Härten von länglichen metallischen Werkstücken, insbesondere Zahnstangen, zu schaffen.

Die technische Lösung ist gekennzeichnet durch die Merkmale des Anspruchs 1.

Dadurch ist ein Induktor zum induktiven Härten von länglichen metallischen Werkstücken, insbesondere Zahnstangen, geschaffen, welcher sich durch ein sehr gutes Härteergebnis auszeichnet. Der Kerngedanke des erfindungsgemäßen Induktors besteht darin, daß zumindest ein Teilbereich des wirksamen Induktors sich in Längsrichtung des länglichen Werkstücks erstreckt. Dies bedeutet, daß dadurch ein Magnetfeld erzeugt wird, dessen Achse parallel zur Achse des länglichen Werkstücks ausgerichtet ist. Durch diese spezielle Ausrichtung des Magnetfeldes wird das induktive Härten des länglichen Werkstücks erheblich verbessert. Der Induktor besitzt dabei mit all seinen Teilabschnitten bezüglich des Werkstücks vorzugsweise einen Zwischenabstand ohne Berührung.

Hinsichtlich der abstrakten Grundform des Induktors handelt es sich um einen sogenannten Steigbügelinduktor. Dies bedeutet, daß der Induktor das längliche Werkstück schleifenartig umschließt. Der Induktor ist dann aber im Bereich, wo er das längliche Werkstück härten soll, derart ausgebildet, daß er einen Teilabschnitt besitzt, welcher sich in Längsrichtung des Werkstücks erstreckt.

Gemäß der Weiterbildung in Anspruch 2 ist der Induktor Z-förmig ausgebildet. Dies bedeutet, daß sich der mittlere Schenkel der insgesamt drei Schenkel des Z in Längsrichtung des Induktors erstreckt, während die beiden anderen Schenkel des Z vorzugsweise senkrecht seitlich abstehen, und zwar der eine Schenkel zur einen Seite hin und der andere Schenkel zur anderen Seite hin.

Eine alternative Ausführungsform schlägt gemäß Anspruch 3 vor, daß der Induktor im Wesentlichen S-förmig ausgebildet ist. Der Vorteil der S-Form besteht darin, daß der Querschnitt des Induktors aufgrund der geschwungenen Form über die gesamte Strecke des S gleichförmig ist und insbesondere keine Abknickungen aufweist. Dadurch ist längs des S ein gleichmäßiger Stromfluß gewährleistet, welcher den Induktor nur wenig beansprucht. Im Betrieb auftretende Beschädigungen treten dabei aufgrund der geringen Beanspruchung so gut wie nicht auf.

Schließlich schlägt die Weiterbildung gemäß Anspruch 4 vor, daß dem vorbeschriebenen Teilabschnitt des Induktors ein oder mehrere, sogenannte Magnetfeldkonzentratoren bzw. Feldführungselemente zugeordnet sind. Diese nehmen gezielt Einfluß auf den Verlauf und die Ausbildung des Magnetfeldes. Dadurch kann das Härteergebnis noch weiter verbessert werden.

Zwei Ausführungsbeispiele eines erfindungsgemäßen Induktors zum induktiven Härten eines länglichen metallischen Werkstückes in Form einer Zahnstange werden nachfolgend anhand der Zeichnungen beschrieben. In diesen zeigt:
- Fig. 1: eine perspektivische Ansicht einer ersten Auführungsform mit einem Z-förmigen Induktor;
- Fig. 2: eine Ansicht senkrecht zur Zahnstange auf das Zahnprofil mit dem Z-förmigen Induktor;
- Fig. 3: eine Ansicht in Richtung der Zahnstange;
- Fig. 4: eine perspektivische Ansicht einer zweiten Auführungsform mit einem S-förmigen Induktor;

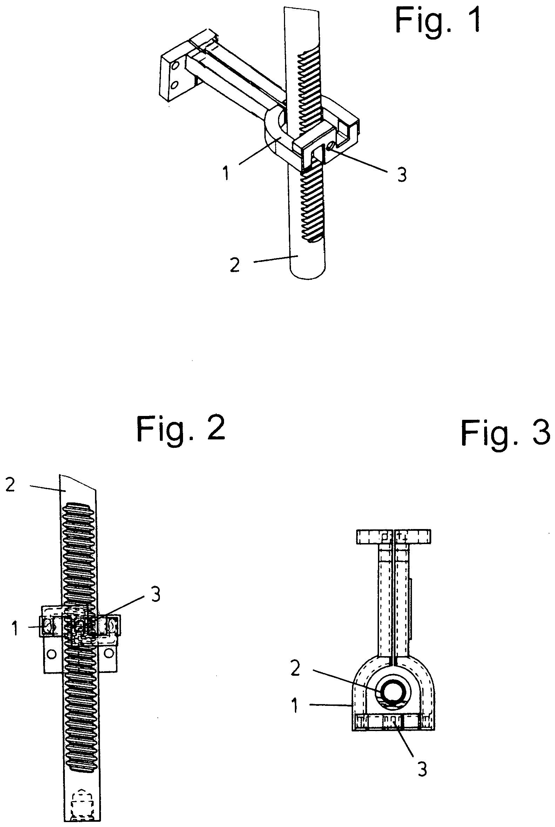

- Fig. 2: eine Ansicht senkrecht zur Zahnstange auf das Zahnprofil mit dem S-förmigen Induktor;
- Fig. 3: eine Ansicht in Richtung der Zahnstange.

Die erste Ausführungsform eines Induktors 1 zum Härten eines Werkstücks 2 in Form einer Zahnstange ist in den Fig. 1 bis 3 dargestellt.

Der Induktor 1 ist dabei in der Art eines sogenannten Steigbügelinduktors schlaufenartig um das Werkstück 2 herumgeführt. In dem Bereich, wo der Induktor das längliche Werkstück 2 härten soll, nämlich das Zahnprofil der Zahnstange, ist dieser Teilabschnitt 3 des Induktors 1 Z-förmig ausgebildet. Wie insbesondere in den Fig. 1 und 2 erkennbar ist, ist der mittlere Teilabschnitt 3 des "Z" des Induktors 1 in Längsrichtung des Werkstücks 2 ausgerichtet. Von den beiden Enden dieses Teilabschnitts 3 gehen zur einen sowie zur anderen Seite hin jeweils entsprechende Abschnitte des Induktors 1 ab. Diese sind dann mit dem U-Abschnitt des Induktors 1 verbunden.

Der Vorteil dieser speziellen Ausbildung des Induktors 1 besteht darin, daß durch den in Längsrichtung des Werkstücks 1 verlaufenden Teilabschnitt 3 ein Magnetfeld erzeugt wird, dessen Achse parallel zur Achse des Werkstücks 2 ausgerichtet ist. Dieses Magnetfeld führt zu einem sehr guten Härteergebnis.

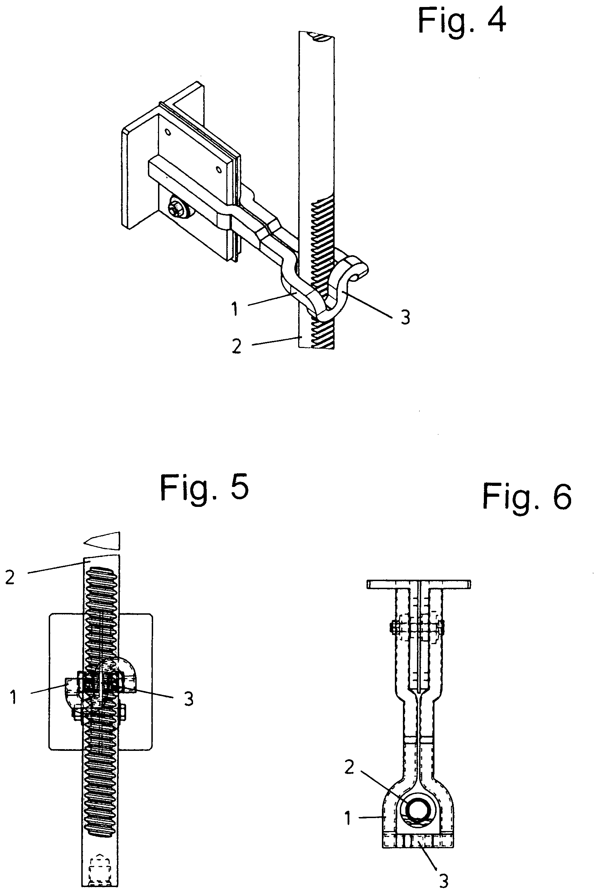

Die alternative Ausführungsvariante in den Fig. 4 bis 6 geht vom gleichen Grundprinzip aus. Der Unterschied zu der ersten Ausführungsvariante besteht darin, daß der Induktor 1 statt einer Z-Form hier eine S-Form aufweist. Dies bedeutet, daß der mittlere Bereich dieses "S" den vorbeschriebenen Teilabschnitt 3 des Induktors 1 definiert, welcher sich in Längsrichtung des Werkstücks 2 erstreckt. Von diesem Teilabschnitt 3 gehen endseitig halbkreisförmige Abschnitte ab, welche entgegengesetzt ausgerichtet sind. Die Enden dieser halbkreisförmigen Induktorabschnitte sind dann mit dem U-förmigen Grundprofil des Induktors 1 verbunden.

Auch hier besteht der Vorteil darin, daß durch die parallele Ausrichtung des Teilabschnitts 3 bezüglich der Längserstreckung des Werkstücks 2 ein entsprechendes Magnetfeld erzeugt wird, dessen Achse parallel zu diesem Werkstück 2 ausgerichtet ist.

### Bezugszeichenliste

- 1: Induktor
- 2: Werkstück
- 3: Teilabschnitt

## Patentansprüche

1. Induktor (1) zum induktiven Härten von länglichen metallischen Werkstücken (2), insbesondere Zahnstangen,
wobei der Induktor (1) zumindest mit einem Teilabschnitt (3) in Längsrichtung des Werkstücks (2) verläuft,
**dadurch gekennzeichnet, dass**
der Induktor (1) das längliche Werkstück (2) schleifenartig umschließt, wobei das längliche Werkstück (2) durch die mittige Schleifenöffnung des Induktors (1) hindurchgeführt ist, und wobei der Induktor (1) eine Schleife in Form eines Steigbügelinduktors bildet, der einen U-Abschnitt und den Teilabschnitt (3), der in Längsrichtung des Werkstücks (2) verläuft, aufweist, wobei der Teilabschnitt (3) ein mittlerer Teilabschnitt ist, der mit dem U-Abschnitt des Induktors (1) verbunden ist.

2. Induktor (1) nach Anspruch 1,
**dadurch gekennzeichnet, dass**
der Induktor (1) im Wesentlichen Z-förmig ausgebildet ist.

3. Induktor (1) nach Anspruch 1,
**dadurch gekennzeichnet, dass**
der Induktor (1) im Wesentlichen S-förmig ausgebildet ist.

4. Induktor (1) nach einem der vorhergehenden Ansprüche,
**dadurch gekennzeichnet, dass**
dem Teilabschnitt (3) des Induktors (1) ein Magnetfeldkonzentrator zugeordnet ist.

## Claims

1. An inductor (1) for inductive hardening of elongated metallic workpieces (2), more particularly toothed racks,
wherein the inductor (1) extends in the longitudinal direction of the workpiece (2) at least with a partial section (3),
**characterised in that**
the inductor (1) encompasses the elongated workpiece (2) in the fashion of a loop, wherein the elongated workpiece (2) is passed through the central loop opening of the inductor (1), and wherein the inductor (1) forms a loop in the form of a stirrup inductor which has a U-section and the partial section (3) extending in the longitudinal direction of the workpiece (2), wherein the partial section (3) is a central partial section that is connected to the U-section of the inductor (1).

2. The inductor (1) in accordance with Claim 1,
**characterised in that**
the inductor (1) is, in essence, formed in the shape of a Z.

3. The inductor (1) in accordance with Claim 1,
**characterised in that**
the inductor (1) is, in essence, formed in the shape of an S.

4. The inductor (1) in accordance with any one of the preceding claims, **characterised in that**
a magnetic field concentrator is assigned to the partial section (3) of the inductor (1).

## Revendications

1. Inducteur (1) pour le durcissement inductif de pièces à usiner (2) métalliques oblongues, en particulier les crémaillères,
l'inducteur (1) passant, au moins avec une section partielle (3), dans le sens longitudinal de la pièce à usiner (2),
**caractérisé par le fait que**
l'inducteur (1) entoure, en forme de boucle, la pièce à usiner (2) oblongue, la pièce à usiner (2) oblongue passant par l'ouverture en boucle médiane de l'inducteur (1) et l'inducteur (1) formant une boucle sous la forme d'un inducteur d'étrier qui présente une section en U et la section partielle (3) qui passe dans le sens longitudinal de la pièce à usiner (2), la section partielle (3) étant une section partielle médiane qui est reliée à la section en U de l'inducteur (1).

2. Inducteur (1) conformément à la revendication n°1,
**caractérisé par le fait que**
l'inducteur (1) est essentiellement réalisé en forme de Z.

3. Inducteur (1) conformément à la revendication n°1,
**caractérisé par le fait que**
l'inducteur (1) est essentiellement réalisé en forme de S.

4. Inducteur (1) conformément à l'une des revendications précédentes, **caractérisé par le fait que**
un concentrateur de champ magnétique est affecté à la section partielle (3) de l'inducteur (1).
